# EUROPÄISCHE PATENTANMELDUNG

(11) **EP 4 847 403 A2**
(43) Veröffentlichungstag der Anmeldung: **02.12.2026**
(21) Anmeldenummer: 26213058.6
(22) Anmeldetag: 05.11.2019
(51) Int. Cl.: B65D 1/02

(54) **KUNSTSTOFFBEHÄLTER MIT WENIGSTENS BEREICHSWEISE SCHARFKANTIG AUSGEBILDETER BEHÄLTERGEOMETRIE UND VERFAHREN ZUR HERSTELLUNG DES KUNSTSTOFFBEHÄLTERS**

(30) Priorität: 22.11.2018 CH 14432018
(62) Dokumentnummer(n) der früheren Anmeldung(en) nach Art. 76 EPÜ: 19801516.6 / 3 883 742
(71) Anmelder: Alpla-Werke Alwin Lehner GMBH & Co.KG, 6971 Hard (AT)
(72) Erfinder: Siegl, Robert, 6850 Dornbirn (AT); Zmölnig, Christian, 6971 Hard (AT)
(74) Vertreter: Bohest AG Branch Ostschweiz

(57) **Zusammenfassung**

Es ist ein Kunststoffbehälter beschrieben, der aus einem Preform mit einem Massenanteil von wenigstens 80% Polyester und gegebenenfalls wenigstens einem Zusatzstoff aus der Gruppe bestehend aus Farbstoffen, Füllstoffen, Katalysatoren, Additiven und Gleitadditiven gefertigt ist. Der Kunststoffbehälter weist einen Behälterhals und eine an den Behälterhals anschliessende Behälterschulter auf, die in einen mit einem Behälterboden verschlossenen Behälterkörper übergeht. Die Behälterschulter, der Behälterboden und der Behälterkörper sind in einem 2-Stufen-Streckblasverfahren ausschliesslich mittels eines Blasverfahrens umgeformt. Das Polyester ist ein Copolyester und weist Gruppen auf, welche von den Monomeren Cyclohexandimethanol (CHDM) und/oder Monoethylenglykol (MEG), Terephtalatsäure (TPA) oder deren Derivate und Isophtalsäure (IPA) oder deren Derivate abstammen. Wenigstens ein Teilbereich des Behälterkörpers und/oder der Behälterschulter weist eine scharfe Kante mit einem Radius von weniger als 0,5 mm auf. Es ist auch ein Verfahren zur Herstellung des Kunststoffbehälters beschrieben.

## Beschreibung

Die Erfindung betrifft einen Kunststoffbehälter mit wenigstens bereichsweise scharfkantig ausgebildeter Behältergeometrie gemäss dem Oberbegriff des Patentanspruchs 1. Die Erfindung betrifft auch ein Verfahren zur Herstellung des Kunststoffbehälters.

Die in der Vergangenheit üblichen Behälter aus Weiss- oder Buntblech, aus Glas oder auch aus Keramik werden in zunehmendem Mass von Behältern aus Kunststoff abgelöst. Insbesondere für die Verpackung fluider Substanzen, beispielsweise für Anwendungen im Haushalt, in Landwirtschaft, Industrie und Gewerbe etc., kommen neuerdings hauptsächlich Kunststoffbehälter zum Einsatz. Das geringe Gewicht und die geringeren Kosten spielen sicher eine nicht unerhebliche Rolle bei dieser Substitution. Die Verwendung rezyklierbarer Kunststoffmaterialien und die insgesamt günstigere Gesamtenergiebilanz bei ihrer Herstellung tragen auch dazu bei, die Akzeptanz von Kunststoffbehältern bei den Anwendern zu fördern.

Ein- oder mehrschichtige Kunststoffbehälter werden oft im sogenannten Extrusionsblasverfahren, insbesondere einem Schlauchblasverfahren, hergestellt. Die für das Extrusionsblasverfahren eingesetzten Extrusionsblasmaschinen besitzen in der Regel einen oder mehrere Extruder zur Zuführung des benötigten Kunststoffmaterials. Der Ausgang des Extruders ist mit einem Extruderkopf verbunden, an dessen vorzugsweise in der Öffnungsweite regulierbarer Austrittsdüse der extrudierte Schlauch austritt. Der extrudierte Kunststoffschlauch kann ein- oder mehrschichtig aufgebaut sein. Der aus der Austrittsdüse kontinuierlich oder quasi-kontinuierlich austretende Schlauch wird in eine Blasform eingesetzt und nach dem Schliessen der Blasform mit Hilfe eines in den Formhohlraum eingefahrenen Blasdorns durch Überdruck aufgeblasen. Danach wird der aufgeblasene Kunststoffbehälter aus der Formkavität entformt. Extrusionsgeblasene Kunststoffbehälter sind anhand einer üblicherweise im Bodenbereich verlaufenden Quetschfalte, die vom Quetschen des extrudierten Kunststoffschlauchs beim Schliessen der Blasform herrührt, identifizierbar. Kunststoffbehälter aus Polyethylenterephthalat (PET) und ähnlichen Materialien werden meist in einem sogenannten Streckblasverfahren hergestellt. Dabei wird zunächst in einem Spritzgiessverfahren in einer Spritzgiessform ein Preform hergestellt. Neuerdings sind auch Fliesspressverfahren oder auch Extrusionsblasen zur Herstellung von Preforms vorgeschlagen worden. Der Preform weist einen im wesentlichen länglichen Preformkörper auf und ist an seinem einen Längsende geschlossen ausgebildet. Dort befindet sich üblicherweise auch ein vom Spritzgiessen herrührender Anspritzpunkt. An das andere Ende des Preformkörpers schliesst ein Halsabschnitt an, der mit einer Ausgiessöffnung versehen ist. Der Halsabschnitt weist bereits die spätere Form des Flaschenhalses auf. An der Aussenseite des Halsabschnitts sind daher üblicherweise bereits Befestigungsmittel für die Festlegung eines Verschlussteils ausgebildet. Die Befestigungsmittel können als gegenüber der Halswandung vor- oder rückspringende Strukturen, beispielsweise Gewindeabschnitte oder dergleichen Vorsprünge oder Gewindefurchen oder Kulissenführungen für einen Bajonettverschluss, ausgebildet sein. Vielfach ist am Halsabschnitt auch ein sogenannter Schnappring vorgesehen, der radial vom Umfang abragt. Der Schnappring dient als ein Widerlager für ein abtrennbares Garantieband eines aufschraubbaren Schraubverschlusses für einen aus dem Preform streckgeblasenen Kunststoffbehälter bzw. bei Ölflaschen oder dergleichen zur Festlegung des unteren Teils eines üblicherweise verwendeten Scharnierverschlusses. Bei den meisten der bekannten Preforms sind der Preformkörper und der Halsabschnitt durch einen sogenannten Supportring voneinander getrennt. Der Supportring ragt radial von der Halswandung ab und dient für den Transport des Preforms bzw. des daraus hergestellten Kunststoffbehälters und für eine Abstützung des Preforms am Blasformwerkzeug bzw. des Kunststoffbehälters beim Verschliessen desselben.

Der Preform wird nach seiner Herstellung entformt und kann in einem einstufigen Streckblasverfahren noch heiss sofort weiterverarbeitet werden. Bei einem Zweistufen-Streckblasverfahren wird der Preform für eine räumlich und/oder zeitlich getrennte Weiterverarbeitung auf einer Streckblasvorrichtung abgekühlt und zwischengelagert. Vor der Weiterverarbeitung in der Streckblasvorrichtung wird der Preform dann bei Bedarf konditioniert, d.h. dem Preform wird ein Temperaturprofil aufgeprägt. Danach wird er in eine Blasform einer Streckblasvorrichtung eingebracht. In der Blasform wird der Preform schliesslich durch ein mit Überdruck eingeblasenes Fluid, üblicherweise Luft, gemäss der Formkavität aufgeblasen und dabei zusätzlich mit einem Reckdorn axial verstreckt.

Es ist auch bereits ein Spritzblasverfahren bekannt, bei dem der Streckblasprozess direkt anschliessend an das Spritzen des Preforms erfolgt. Der Preform verbleibt dabei auf dem Spritzkern, der zugleich eine Art Reckdorn bildet. Der Preform wird wiederum durch Überdruck gemäss der Formkavität einer Blasform, die auf den Spritzkern zugestellt wird oder umgekehrt, aufgeblasen und dabei vom Reckdorn verstreckt. Danach wird der fertige Kunststoffbehälter entformt. Streckgeblasene bzw. spritzgeblasene Kunststoffbehälter sind anhand des üblicherweise im Bereich des Behälterbodens angeordneten, vom Preform herrührenden Anspritzpunktes identifizierbar, in dem das Kunststoffmaterial nur geringfügig bis gar nicht verstreckt worden ist.

Oftmals werden vom Markt Kunststoffbehälter gewünscht, die wenigstens bereichsweise eine scharfkantige Behältergeometrie aufweisen. Die Scharfkantigkeit soll dabei im Schulterbereich und/oder im Körperbereich des Kunststoffbehälters vorliegen. Die Scharfkantigkeit kann dabei aus Festigkeitsgründen, aus ästhetischen aber auch aus anderen praktischen Gründen gefordert sein, beispielsweise um eine bessere Handhabbarkeit oder auch um eine dichtere Stapelbarkeit des Kunststoffbehälters zu erzielen.

Als scharfkantig im Sinne der vorliegenden Erfindung werden dabei Kanten bezeichnet, die einen Krümmungsradius von kleiner als 0,5 mm aufweisen. Während derartige scharfkantige Geometrien im Spritzgiessverfahren realisiert werden können, sind bei den aus dem Stand der Technik bekannten Blasverfahren nur kleinste Radien bis 0,5 mm ausführbar. Dies deshalb, weil dünnflüssige Kunststoffmassen, wie sie z.B. für das Spritzgiessverfahren eingesetzt werden können, sich nicht für das Blasverfahren eignen, weil sie die Tendenz zeigen, beim Aufblasen zu reissen oder aufzuplatzen. Mit dickflüssigeren Kunststoffmassen, die für das Blasverfahren sehr gut geeignet sind, können beim Blasprozess scharfe Kanten und Ecken nicht ausgeformt werden. Die wegen ihrer guten Streckverfestigung für eine kostengünstige Herstellung von dünnwandigen Kunststoffbehältern im Streckblasverfahren besonders häufig eingesetzten, auf Polyester basierenden Kunststoffe, wie z.B. Polyethylenterephthalat (PET), neigen beim intensiven Verstrecken zum sogenannten "strain hardening". Das bedeutet, dass sich diese Kunststoffe beim intensiven Verstrecken soweit versteifen, dass es nicht mehr möglich ist, scharfkantige Konturen auszublasen. Streckgeblasene Kunststoffbehälter können zwar im Bereich des Behälterhalses scharfkantig ausgebildete vor- oder rückspringende Strukturen, beispielsweise Gewindeabschnitte, Gewindegänge oder dergleichen, aufweisen. Dies ist jedoch darauf zurückzuführen, dass streckgeblasene Kunststoffbehälter aus einem Preform hergestellt werden, der vor dem Streckblasverfahren in einem Spritzgiessverfahren gefertigt wird. Der dabei spritzgegossene Halsabschnitt des Preforms wird in der Regel beim anschliessenden Streckblasen nicht mehr verformt.

Aufgabe der vorliegenden Erfindung ist es daher, den geschilderten Problemen abzuhelfen. Ein Blasverfahren soll dahingehend modifiziert werden, dass damit auch die Herstellung von Kunststoffbehältern mit scharfkantigen Geometrien in der Behälterschulter und/oder im Behälterkörper ermöglicht ist. Der grundlegende Ablauf des jeweiligen Blasverfahrens soll dabei beibehalten werden können.

Die Lösung dieser Aufgaben besteht in einem Kunststoffbehälter mit wenigstens bereichsweise scharfkantig ausgebildeter Behältergeometrie in einem Blasverfahren, welcher die im Patentanspruch 1 angeführten Merkmale aufweist. Die Aufgaben werden erfindungsgemäss auch durch ein Verfahren gelöst, welches die im breitesten Verfahrensanspruch aufgelisteten Verfahrensmerkmale aufweist. Weiterbildungen und/oder vorteilhafte Ausführungsvarianten der Erfindung sind Gegenstand der jeweiligen abhängigen Vorrichtungs- bzw. Verfahrensansprüche.

Die Erfindung schlägt einen Kunststoffbehälter vor, der aus einem Preform mit einem Massenanteil von wenigstens 80% Polyester und gegebenenfalls wenigstens einem Zusatzstoff aus der Gruppe bestehend aus Farbstoffen, Füllstoffen, Katalysatoren, Additiven und Gleitadditiven gefertigt ist. Der Kunststoffbehälter weist einen Behälterhals und eine an den Behälterhals anschliessende Behälterschulter auf, die in einen mit einem Behälterboden verschlossenen Behälterkörper übergeht. Die Behälterschulter, der Behälterboden und der Behälterkörper sind in einem 2-Stufen-Streckblasverfahren ausschliesslich mittels eines Blasverfahrens umgeformt. Das Polyester ist ein Copolyester und weist Gruppen auf, welche von den Monomeren Cyclohexandimethanol (CHDM) und/oder Monoethylenglykol (MEG), Terephthalatsäure (TPA) oder deren Derivate und Isophtalsäure (IPA) oder deren Derivate abstammen. Wenigstens ein Teilbereich des Behälterkörpers und/oder der Behälterschulter weist eine scharfe Kante mit einem Radius von weniger als 0,5 mm auf.

Durch das Copolyester werden die Streckverfestigung und Kristallisation des auf Polyester basierenden Kunststoffes verlangsamt. Dadurch kann das "strain hardening" angepasst werden, und es können auch scharfkantige Strukturen mit Krümmungsradien kleiner als 0,5 mm in einem Blasverfahren hergestellt werden. Die scharfkantigen Strukturen können sich im Wesentlichen in radialer Richtung erstrecken. Die scharfkantigen Strukturen können sich jedoch auch in Umfangsrichtung des Behälterkörpers erstrecken. Der Kunststoffbehälter ist in einem 2-Stufen-Streckblasverfahren hergestellt. Das Streckblasverfahren ist hinlänglich bekannt und erlaubt die Verarbeitung einer Vielzahl von Kunststoffformulierungen mit kurzen Zykluszeiten. Die Fertigung des Kunststoffbehälters ausschliesslich mittels eines Blasverfahrens kann bedeuten, dass die Blasform keine beweglichen Teile aufweist, die den Kunststoffbehälter nach dem Blasformen in seiner Aussenkontur derart verändern, dass hierdurch ein technischer Effekt erzielt wird. Ein technischer Effekt kann beispielsweise sein, mittels eines in die Kavität der Blasform einfahrenden Stempels einen eingezogenen Boden zu erzeugen. Das erfindungsgemässe Ausgangsmaterial ist auch für die Verarbeitung im Spritzgiessverfahren zur Herstellung des Preforms, aus dem danach der Kunststoffbehälter mit scharfkantigen Strukturen hergestellt wird, geeignet.

Das Copolyester weist in einer Variante der Erfindung eine nach ASTM D4603 gemessene Intrinsische Viskosität von weniger als 0,75 dl/g, bevorzugt von 0,60 dl/g bis 0,73 dl/g, besonders bevorzugt von 0,65 dl/g bis 0,71 dl/g, auf. Durch die gewählte intrinsische Viskosität ist der Kunststoff sowohl für die Herstellung des Preforms in einem Spritzgiessverfahren als auch für die weitere Umformung des Preforms in einem Blasverfahren geeignet. Die gewählte intrinsische Viskosität erlaubt dabei am Kunststoffbehälter die Ausbildung von scharfen Kanten mit einem Krümmungsradius von weniger als 0,5 mm.

Bei einer weiteren Ausführungsvariante der Erfindung besitzt das Copolyester eine Dichte von 1,1 g/cm³ bis 1,3 g/cm³. Die gewählte Dichte des Copolyesters verbessert die Verarbeitbarkeit des Kunststoffs noch weiter.

Bei einer Variante der Erfindung kann das Copolyester aus Diol-Anteilen und Dicarbonsäure-Anteilen bestehen, die zusammen 100% der Stoffmenge ergeben, wobei der Diol-Anteil 40% bis 60% der Stoffmenge beträgt. Die Summe der Stoffmengenanteile aus Cyclohexandimethanol (CHDM) und Monoethylenglykol (MEG) bezogen auf den Diolanteil kann 100% sein, wobei Cyclohexandimethanol (CHDM) einen Anteil von 0% bis 100% an der Stoffmenge des Diolanteils hat.

Bei einer alternativen Ausführungsvariante des Kunststoffbehälters kann der Dicarbonsäure-Anteil aus Isophtalsäure oder deren Derivaten und aus Terephtalatsäure oder deren Derivaten bestehen. Die Summe der Stoffmengenanteile aus Isophtalsäure oder deren Derivaten und aus Terephtalatsäure oder deren Derivaten bezogen auf den Dicarbonsäureanteil kann 100% betragen, wobei Isophtalsäure oder deren Derivate einen Anteil von 10% bis 60% an der Stoffmenge des Dicarbonsäureanteils haben können.

Eine Ausführungsvariante des Kunststoffbehälters kann vorsehen, dass der in eine Blasform eingesetzte Preform durch das Blasverfahren derart umgeformt ist, dass aus einem in die Blasform ragenden einseitig verschlossenen Preformkörper des Preforms die Behälterschulter, der Behälterboden und der Behälterkörper des Kunststoffbehälter gemäss einer Innengeometrie einer Kavität der Blasform ausgebildet ist. Der Körper des Kunststoffbehälters ist beim Blasverfahren dabei entlang einer Mittelachse des Preforms um einen Faktor 2 bis 4 gegenüber dem Preformkörper verstreckt. Durch diesen Längsverstreckungsgrad weist der Kunststoffbehälter eine ausreichend grosse mechanische Festigkeit und gute Barriereeigenschaften auf.

Je nach Zusammensetzung des Ausgangsmaterials und nach Verfahrensführung zu seiner Herstellung kann der Kunststoffbehälter wenigstens eine scharfe Kante mit einem Radius von weniger als 0,3 mm, vorzugsweise weniger als 0,1 mm, aufweisen.

Der Kunststoffbehälter ist vorzugsweise einstückig ausgebildet.

Indem der Kunststoffbehälter Wandungen aufweist, die ein- oder mehrschichtig sind, ist der Kunststoffbehälter spezifisch auf die Anforderungen in seiner Anwendung optimiert.

Bei einer Ausführungsvariante des Kunststoffbehälters kann die scharfe Kante wenigstens an einem Teilbereich eines Übergangs zwischen der Behälterschulter und dem Behälterkörper ausgeformt sein. Diese Ausbildung hat abgesehen von ästhetischen Gesichtspunkten auch Vorteile hinsichtlich der Steifigkeit im Übergangsbereich von der Behälterschulter zum Behälterkörper. Bei weiteren Ausführungsvarianten des Kunststoffbehälters können alternativ oder in Ergänzung dazu auch die Behälterschulter und/oder der Behälterkörper selbst wenigstens bereichsweise mit scharfkantigen Übergängen ausgebildet sein, die Krümmungsradien von kleiner als 0,5 mm aufweisen. Dabei kann der Kunststoffbehälter ein- oder mehrschichtig ausgebildet sein.

Bei einem Verfahren zur Herstellung des Kunststoffbehälters in einem Blasverfahren wird der in eine Blasform eingesetzte Preform während des Blasverfahrens mit einer axialen Reckgeschwindigkeit von etwa 1 m/s bis etwa 3 m/s verstreckt wird. Durch die hohe Streckgeschwindigkeit können die Molekülketten des Kunststoffmaterials nicht schnell genug aneinander abgleiten. Dadurch kann der in der Blasform ausgebildete Kunststoffbehälter auch nicht aufreissen. Auch bleibt bei diesen Streckverhältnissen das Kunststoffmaterial ausreichend verformbar, um scharfkantige Strukturen erzeugen zu können.

Bei einer bevorzugten Verfahrensvariante wird der Preformkörper in einem 2-Stufen-Streckblasverfahren entlang seiner Mittelachse mittels eines Reckdorns verstreckt.

Um den Effekt der hohen Reckgeschwindigkeit noch zu verbessern, wird bei einer weiteren Variante des Verfahrens zur Herstellung des Kunststoffbehälters zur Ausformung der Behälterschulter und des Behälterkörpers ein Fluid mit einem Druck grösser als 10 bar und kleiner als 40 bar in den auf eine vorbestimmte Temperatur erwärmten Preform eingebracht.Das Fluid kann hierbei Gas, bevorzugt Luft, oder eine Flüssigkeit sein.

Die Verzögerung der Streckverfestigung des Kunststoffmaterials beim Blasformen kann in einer weiteren Verfahrensvariante auch noch dadurch erhöht werden, dass eine Blasform mit einer Kavität, entlang deren Innengeometrie die Behälterschulter, der Behälterboden und der Behälterkörper ausgebildet werden, auf eine Temperatur erwärmt wird, die grösser als 10°C und kleiner als 100°C ist.

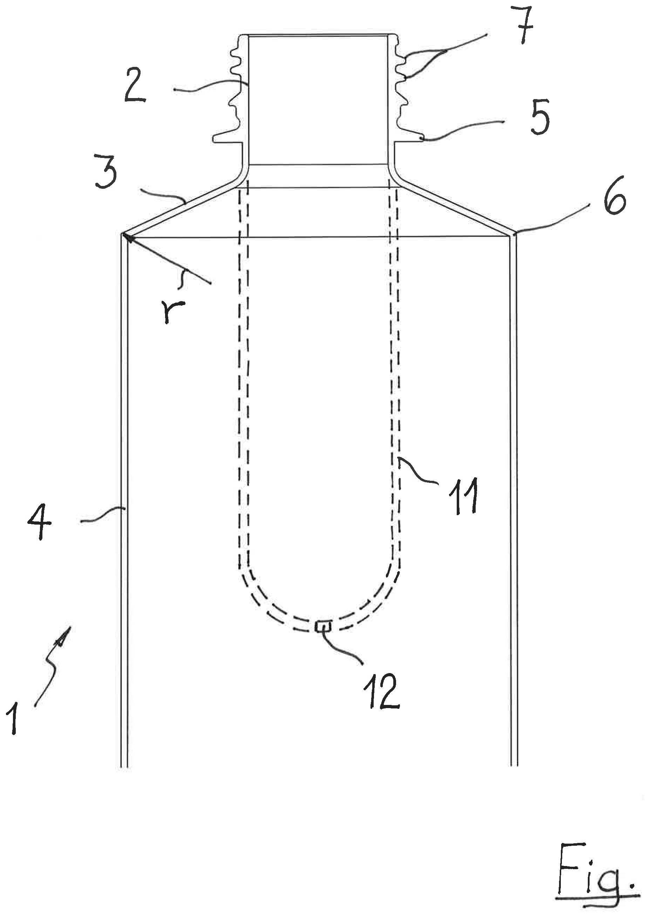

Im Folgenden wird die Erfindung unter Bezugnahme auf die einzige Abbildung erläutert, in der ein Kunststoffbehälter in einem schematischen Schnitt dargestellt ist. Der Kunststoffbehälter trägt gesamthaft das Bezugszeichen 1. Er ist beispielsweise in einem Streckblasverfahren aus einem spritzgegossenen Preform hergestellt, der in der Abbildung strichliert angedeutet ist und mit dem Bezugszeichen 11 versehen ist. Der Kunststoffbehälter 1 weist einen Behälterhals 2 und einen mit einem Behälterboden verschlossenen Behälterkörper 4 auf, die über eine Behälterschulter 3 miteinander verbunden sind. Die Behälterschulter 3 ist durch einen radial abragenden Supportring 5 vom Behälterhals 2 getrennt und erstreckt sich bis zu einem scharfkantig ausgebildeten Übergang 6 zum Behälterkörper 4. Scharfkantig bedeutet dabei im Sinne der vorliegenden Erfindung, dass der Behälter am Übergang 6 einen Krümmungsradius r aufweist, der kleiner ist als 0,5 mm. Beispielsweise kann der Krümmungsradius nur 0,2 mm bis 0,3 mm betragen. Der Behälterhals 2 entspricht dabei dem Hals des Preforms 11, der in einem Spritzgiessverfahren hergestellt worden ist. Der Hals des Preforms 11 befindet sich beim Streckblasverfahren ausserhalb der Blasform und wird nicht weiter umgeformt. Deshalb kann der Behälterhals Strukturen 7 aufweisen, die relativ scharfkantig ausgebildet sind. Diese sind jedoch nicht eine Folge des Streckblasverfahrens sondern sind ein Ergebnis des Spritzgiessverfahrens, welches auch die Herstellung von Strukturen mit Krümmungsradien kleiner als 0,5 mm erlaubt. Die gegenüber der Behälterschulter 3 und/oder dem Behälterkörper 4 vor- oder rückspringenden scharfkantigen Strukturen 7 am Behälterhals 2 können beispielsweise Gewindeabschnitte, Gewindefurchen oder dergleichen sein. Während in der Abbildung ein Kunststoffbehälter 1 mit einem Supportring 5 dargestellt ist, versteht es sich, dass die erfindungsgemässe Ausbildung auch an Kunststoffbehältern ohne Supportring vorgesehen sein kann.

Der Kunststoffbehälter 1 weist gegenüber einer axialen Erstreckung des Preforms 11 ein axiales Streckverhältnis von 2 bis 4 auf. Am Boden des strichliert angedeuteten Preforms 11 befindet sich ein vom Spritzgiessverfahren resultierender Anspritzpunkt, der mit dem Bezugszeichen 12 versehen ist. In diesem Bereich wird der Preform 11 beim axialen Reckvorgang während des Streckblasverfahrens nur unwesentlich verstreckt. Der Anspritzpunkt 12 ist daher üblicherweise auch am Behälterboden des fertig streckgeblasenen Behälters 1 ersichtlich. Auf diese Weise können streckgeblasene Kunststoffbehälter 1 identifiziert und von auf andere Weise hergestellten Kunststoffbehältern, beispielsweise von extrusionsgeblasenen Kunststoffbehältern, die üblicherweise im Bodenbereich eine Quetschfalte aufweisen, unterschieden werden.

Der erfindungsgemässe Kunststoffbehälter 1 ist aus einem Preform gefertigt, der zu wenigstens 80% aus Polyester und gegebenenfalls wenigstens einem Zusatzstoff aus der Gruppe bestehend aus Farbstoffen, Füllstoffen, Katalysatoren, Additiven und Gleitadditiven besteht. Das Polyester ist ein Copolyester und weist Gruppen auf, welche von den Monomeren Cyclohexandimethanol (CHDM) und/oder Monoethylenglykol (MEG), Terephtalatsäure (TPA) oder deren Derivate und Isophtalsäure (IPA) oder deren Derivate abstammen. Das Copolyester weist eine nach ASTM D4603 gemessene Intrinsische Viskosität von weniger als 0,75 dl/g, bevorzugt von 0,60 dl/g bis 0,73 dl/g, besonders bevorzugt von 0,65 dl/g bis 0,71 dl/g, auf. Das Copolyester besitzt eine Dichte von 1,1 g/cm³ bis 1,3 g/cm³. Das Copolyester besteht aus Diol-Anteilen und Dicarbonsäure-Anteilen, die zusammen 100% der Stoffmenge ergeben, wobei der Diol-Anteil 40% bis 60% der Stoffmenge beträgt. Die Summe der Stoffmengenanteile aus Cyclohexandimethanol (CHDM) und Monoethylenglykol (MEG) bezogen auf den Diolanteil kann 100% sein, wobei Cyclohexandimethanol (CHDM) einen Anteil von 0% bis 100% an der Stoffmenge des Diolanteils hat. Der Dicarbonsäure-Anteil besteht aus Isophtalsäure oder deren Derivaten und aus Terephtalatsäure oder deren Derivaten. Die Summe der Stoffmengenanteile aus Isophtalsäure oder deren Derivaten und aus Terephtalatsäure oder deren Derivaten bezogen auf den Dicarbonsäureanteil beträgt 100%, wobei Isophtalsäure oder deren Derivate einen Anteil von 10% bis 60% an der Stoffmenge des Dicarbonsäureanteils haben.

Die Umformung des Preforms zu dem erfindungsgemässen Kunststoffbehälter 1 erfolgt ausschliesslich in einem Blasverfahren, vorzugsweise einem Streckblasverfahren, welches zweistufig ist. Beim Streckblasverfahren wird der in eine Blasform eingesetzte erwärmte Preform während des Streckblasvorgangs mit Hilfe eines Reckdorns mit einer axialen Reckgeschwindigkeit von etwa 1 m/s bis etwa 3 m/s gereckt wird. Der Blasdruck beträgt dabei etwa 10 bar bis 40 bar. Dabei wird die die Blasform auf einer Temperatur grösser als etwa 10 °C, aber kleiner als 100 °C gehalten.

Die am Kunststoffbehälter 1 erstellten scharfkantigen Strukturen weisen einen Krümmungsradius auf, der kleiner ist als 0,5 mm, vorzugsweise kleiner als 0,3 mm, besonders bevorzugt kleiner als 0,1mm. Die scharfkantigen Strukturen können am Übergang 6 von der Behälterschulter 3 zum Behälterkörper 4 angeordnet sein. Bei weiteren Ausführungsvarianten des Kunststoffbehälters 1 können alternativ oder in Ergänzung dazu auch die Behälterschulter 3 und/oder der Behälterkörper 4 wenigstens bereichsweise mit scharfkantigen Übergängen und/oder Strukturen ausgebildet sein, die Krümmungsradien von kleiner als 0,5 mm aufweisen. Dabei kann der Kunststoffbehälter 1 ein- oder mehrschichtig ausgebildet sein.

Die Erfindung ist am Beispiel eines in einem Streckblasverfahren hergestellten Kunststoffbehälters erläutert worden. Die vorstehende Beschreibung dient jedoch nur zur Erläuterung der Erfindung und ist nicht als einschränkend zu betrachten. Vielmehr wird die Erfindung durch die Patentansprüche und die sich dem Fachmann erschliessenden und vom allgemeinen Erfindungsgedanken umfassten Äquivalente definiert.

## Patentansprüche

1. Kunststoffbehälter gefertigt aus einem Preform mit einem Massenanteil von wenigstens 80% Polyester, mit einem Behälterhals und einer an den Behälterhals anschliessenden Behälterschulter, die in einen mit einem Behälterboden verschlossenen Behälterkörper übergeht, wobei die Behälterschulter, der Behälterboden und der Behälterkörper in einem 2-Stufen-Streckblasverfahren ausschliesslich mittels eines Blasverfahrens umgeformt sind, **dadurch gekennzeichnet, dass** das Polyester ein Copolyester ist und Gruppen aufweist, welche von den Monomeren Cyclohexandimethanol (CHDM) und/oder Monoethylenglykol (MEG), Terephtalatsäure (TPA) oder deren Derivate und Isophtalsäure (IPA) oder deren Derivate abstammen und dass wenigstens an einem Teilbereich eines Übergangs zwischen dem Behälterkörper und der Behälterschulter eine scharfe Kante mit einem Krümmungsradius von kleiner als 0,5 mm ausgebildet ist.

2. Kunststoffbehälter nach Anspruch 1, **dadurch gekennzeichnet, dass** das Copolyester eine nach ASTM D4603 gemessene Intrinsische Viskosität von weniger als 0,75 dl/g, bevorzugt von 0,60 dl/g bis 0,73 dl/g, besonders bevorzugt von 0,65 dl/g bis 0,71 dl/g, aufweist.

3. Kunststoffbehälter nach nach Anspruch 1 oder 2, **dadurch gekennzeichnet, dass** das Copolyester eine Dichte von 1,1 g/cm³ bis 1,3 g/cm³ aufweist.

4. Kunststoffbehälter nach einem der vorhergehenden Ansprüche, **dadurch gekennzeichnet, dass** das Copolyester aus Diol-Anteilen und Dicarbonsäure-Anteilen besteht, die zusammen 100% der Stoffmenge ergeben, wobei der Diol-Anteil 40% bis 60% der Stoffmenge ist.

5. Kunststoffbehälter nach Anspruch 4, **dadurch gekennzeichnet, dass** die Summe der Stoffmengenanteile aus Cyclohexandimethanol (CHDM) und Monoethylenglykol (MEG) bezogen auf den Diolanteil 100% ist und CHDM einen Anteil von 0% bis 100% an der Stoffmenge des Diolanteils hat.

6. Kunststoffbehälter nach Anspruch 4, **dadurch gekennzeichnet, dass** der Dicarbonsäure-Anteil aus Isophtalsäure oder deren Derivaten und aus Terephtalatsäure oder deren Derivaten besteht.

7. Kunststoffbehälter nach Anspruch 6, **dadurch gekennzeichnet, dass** die Summe der Stoffmengenanteile aus Isophtalsäure oder deren Derivaten und aus Terephtalatsäure oder deren Derivaten bezogen auf den Dicarbonsäureanteil 100% ist und Isophtalsäure oder deren Derivate einen Anteil von 10% bis 60% an der Stoffmenge des Dicarbonsäureanteils hat.

8. Kunststoffbehälter nach einem der vorhergehenden Ansprüche, **dadurch gekennzeichnet, dass** der in eine Blasform eingesetzte Preform durch das Blasverfahren derart umgeformt ist, dass aus einem in die Blasform ragenden einseitig verschlossenen Preformkörper des Preforms die Behälterschulter, der Behälterboden und der Behälterkörper des Kunststoffbehälter gemäss einer Innengeometrie einer Kavität der Blasform ausgebildet ist, wobei der Preformkörper entlang seiner Mittelachse um einen Faktor 2 bis 4 verstreckt ist.

9. Kunststoffbehälter nach einem der vorhergehenden Ansprüche, **dadurch gekennzeichnet, dass** die scharfe Kante einen Radius von weniger als 0,3 mm, vorzugsweise weniger als 0,1 mm, aufweist.

10. Kunststoffbehälter nach einem der vorhergehenden Ansprüche, **dadurch gekennzeichnet, dass** der Kunststoffbehälter einstückig ausgebildet ist.

11. Kunststoffbehälter nach einem der vorhergehenden Ansprüche, **dadurch gekennzeichnet, dass** er Wandungen aufweist, die ein- oder mehrschichtig ausgebildet sind.

12. Verfahren zur Herstellung eines Kunststoffbehälters nach einem der vorhergehenden Ansprüche, **dadurch gekennzeichnet, dass** ein an einen Preformhals anschliessender einseitig verschlossener Preformkörper entlang einer Mittelachse des Preforms mit einer Geschwindigkeit von 1m/sec bis 3m/sec in einem Blasverfahren verstreckt wird.

13. Verfahren nach Anspruch 13, **dadurch gekennzeichnet, dass** der Preformkörper in einem 2-Stufen-Streckblasverfahren entlang seiner Mittelachse mittels eines Reckdorns verstreckt wird.

14. Verfahren nach Anspruch 13 oder 14, **dadurch gekennzeichnet, dass** zur Ausformung der Behälterschulter, des Behälterbodens und des Behälterkörpers ein Fluid mit einem Druck grösser als 10 bar und kleiner als 40 bar in den auf eine vorbestimmte Temperatur erwärmten Preform eingebracht wird,

15. Verfahren nach einem der Ansprüche 13 bis 15, **dadurch gekennzeichnet, dass** eine Blasform mit einer Kavität, entlang deren Innengeometrie die Behälterschulter, der Behälterboden und der Behälterkörper ausgebildet werden, auf eine Temperatur erwärmt wird, die grösser als 10°C und kleiner als 100°C ist.
